# EUROPEAN PATENT APPLICATION

(11) **EP 1 076 197 A2**
(43) Date of publication of application: **14.02.2001**
(21) Application number: 00117002.6
(22) Date of filing: 08.08.2000
(51) Int. Cl.: F16L 5/02

(54) **Seal**

(30) Priority: 13.08.1999 DE 19938465
(71) Applicant: Valeo Klimasysteme GmbH, 96476 Rodach (DE)
(72) Inventor: Reitz, Ulrich, 96215 Lichtenfels (DE)
(74) Representative: Lemaire, Marc

(57) **Abstract**

A seal for sealing one or more conduits, in particular pipes of a heating/air-conditioning system in an opening defined in a wall, has a conduit engagement portion and a wall engagement portion (10). On the wall engagement portion, there is a tongue (30) which allows the wall engagement portion to be positioned relative to the wall. The wall engagement portion is advantageously defined by limbs (12,14,16) which can be deformed essentially elastically at least in part by acting upon the tongue.

## Description

The present invention relates in general terms to a seal for sealing one or more conduits in an opening defined in a wall. In particular but not exclusively, the invention can be employed for sealing pipes of a heating/air-conditioning system in such an opening.

Such seals generally comprise at least one conduit engagement portion and one wall engagement portion, which are connected to one another by a body portion of the seal. One such seal is described, for example, in unexamined Japanese Patent Application JP 56-103612, in which the body portion of the seal is of bellows-type design to allow sealing even of conduits which are off-centre relative to the opening. Since sealing by means of the wall engagement portion is generally accomplished by leak-tight form-locking engagement, positioning of the latter is often difficult. The correct positioning must then be checked and, if positioning is incorrect, the entire arrangement process must generally be repeated. In the case of maintenance work, such a seal is generally disengaged forcibly from the wall section, and this often leads to destruction and thus to a requirement for a replacement seal.

There is therefore a need for a seal which can be handled more easily and which, in particular, allows accurate, releasable and repeatable positioning. It is therefore the object of the present invention to develop a seal, mentioned above, of the generic type in such a way that it can be positioned releasably and with repeatable accuracy, thus simplifying both first-time installation and installation in the event of maintenance work. The seal should moreover have improved sealing properties and be capable of being used on any desired wall sections, e.g. even on walls which define a cavity or comprise a plurality of essentially parallel wall sections.

According to the present invention, there is provided a Seal for sealing one or more conduits, in particular pipes of a heating/air-conditioning system in an opening defined in a wall, having a conduit engagement portion and a wall engagement portion, wherein the wall engagement portion has a tongue which allows at least one part of the wall engagement portion to be positioned relative to the wall.

The provision of a tongue, which can, for example, extend from the distal end of the seal, makes the seal easier to move and, in particular, to deform in accordance with requirements.

Advantageously, the tongue has profile-type projections to allow it to be grasped more easily by hand.

To make the wall engagement portion deformable in accordance with requirements, it is formed essentially by at least two, in particular three or more, limbs, and it is advantageously possible for the tongue to be provided at the free end of the last limb, i.e. at the distal end of the wall engagement portion.

Advantageously, two limbs can define a seating for part of the wall, e.g. a sheet-metal body part situated between a passenger compartment and an engine compartment. In this case, one of the limbs forms a body-side contact area, while the adjacent limbs are provided for the purpose of engaging behind the wall section.

In a preferred embodiment, at least two of the limbs define an angle that can be varied by acting upon the tongue, e.g. pulling it. In other words, the limbs can be altered in such a way by acting upon the tongue that the geometrical configuration of the seal is modified, e.g. to make insertion easier. In this way, it is possible, for example, to arrange the seal in the opening to be sealed without the risk of damage to the seal due to frictional engagement, as in the case of seals according to the state of the art.

Advantageously, the at least two limbs can be prestressed relative to one another, with the result that they assume a predetermined configuration once the load imposed by means of the tongue is relieved.

Advantageously, at least two of the limbs can be positioned between two wall sections. The seal can thus advantageously be used to make a double engagement relative to a double wall. In this case, a fold comprising at least two limbs is arranged in the cavity, and the prestress can maintain the sealing function in relation to both walls.

In a particularly preferred embodiment, the wall engagement portion is designed in such a way that it can be brought into engagement with at least two essentially parallel wall sections. In this case, the two parallel wall sections can be present either with a fixed spacing or, as an alternative, can be formed by a fixed wall section and a wall section which is mounted in such a way that it can move relative to the latter. In other words, it is possible to arrange the seal in relation to a fixed wall section and then to achieve and/or improve the sealing function by arranging another wall section in such a way that the two limbs situated between the wall sections are acted upon relative to one another to obtain an enhanced sealing action.

To improve the sealing function even further, the wall engagement portion preferably has profile-type projections on at least one surface which can be brought into engagement with a wall section. By means of the formation of profile-type projections, it is thus possible in a simple manner to provide linear sealing engagements, e.g. around the periphery of the opening.

Finally, it is preferable that mutually opposite surfaces of the limbs and/or of wall sections should have provided on them means for inhibiting relative motion essentially parallel to the surfaces. The provision of such means makes it possible to maintain a fixed position, even when a vehicle is under way, since the seal is less sensitive to vibration.

Further advantages and features of the present invention will become apparent from the following detailed description of a purely illustrative, currently preferred embodiment, which is given with reference to the attached drawings, in which:
Fig. 1 shows the wall engagement portion of a preferred embodiment of the seal according to the invention in schematic, partially sectioned view;
Fig. 2 shows a view similar to that in Fig. 1, engagement by means of two wall sections being illustrated.

In the figures, like reference numerals refer to like parts.

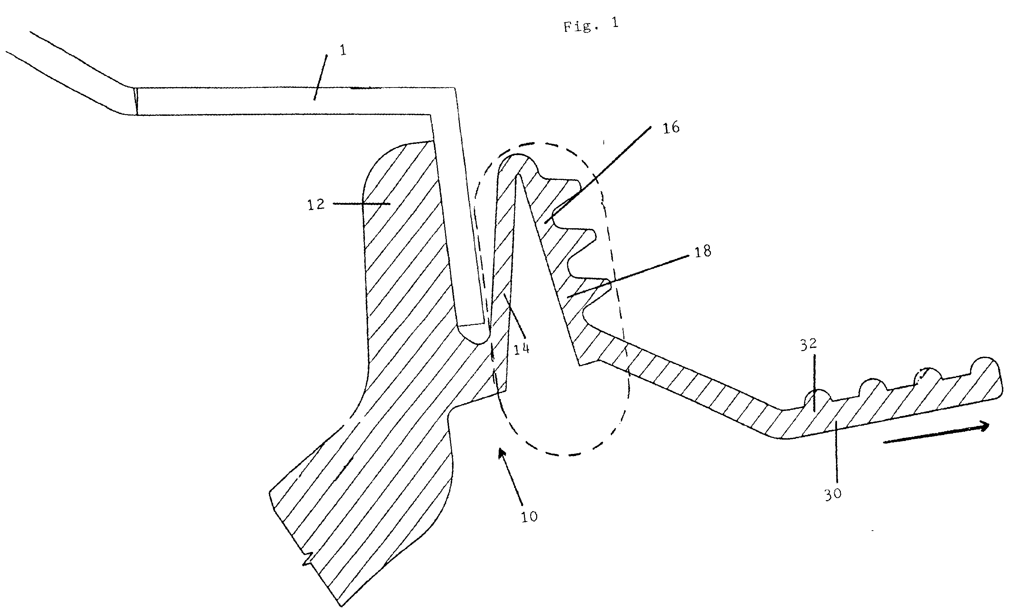

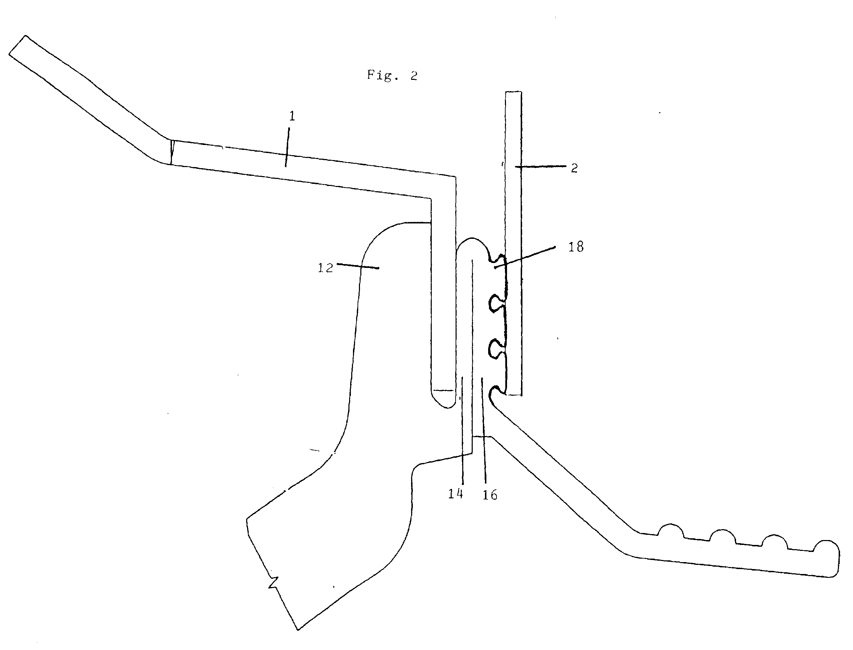

The seal shown in Fig. 1 comprises a conduit engagement portion (not shown) and a wall engagement portion 10, which can be brought into engagement with the wall 1. In the embodiment shown, the wall engagement portion 10 comprises a first limb 12, which is designed as a contact surface with respect to the wall 1. Adjoining the first limb 12 there is a second limb 14, a seating for the wall section 1 being formed between the limbs 12 and 14. Provided at the distal end of the second limb 14 is a third limb 16, which, under prestress, forms a predefined angle relative to the second limb 14. The third limb 16 is provided with profile-type projections 18, which will be described below in detail with reference to Fig. 2.

To enable the seal to be positioned relative to the wall section 1, the invention provides a tongue 30 on the third limb 16. On the one hand, this tongue enables the seal to be arranged accurately relative to the wall section 1 and, on the other hand, it can be used to alter the configuration of the wall engagement portion 10. When the tongue 30 is grasped and subjected to tension, for example, the two limbs 14 and 16, the material of which is thinner than that of the limb 12 in the embodiment shown, can be deformed in a simple manner in order, on the one hand, to release them from engagement with the wall section 1 and, on the other hand, to reduce the outside diameter of the portion engaging behind.

To simplify the application of tension by grasping it manually, profile-like projections 32 are provided on the tongue, allowing positioning and deformation to be performed as desired even when there is contamination, e.g. by oil.

The arrangement and positioning of the wall engagement portion 10 will be explained briefly below. As illustrated in Fig. 1, the seal is moved into proximity with the opening defined in the wall 1 from the left. During this positioning process, the tongue 30 projects through the opening, allowing the fitter to grasp it from the other side of the wall 1. By pulling the tongue 30, the fold defined by the limbs 14 and 16 is pulled apart, with the result that, in the case of a circular seal, for example, the diameter at that point is reduced. The person skilled in the art will realise that, by pulling the tongue 30, the two limbs 14 and 16 can be moved into a position in which they are virtually in alignment, with the result that the seal enters the opening easily until the contact portion defined by the limb 12 enters into engagement with the wall 1. All that is then necessary is to release the load on the tongue 30, with the result that the wall engagement portion 10 resumes its original configuration.

The person skilled in the art will realise that the engagement with respect to the wall section 1 can be released by pulling the tongue again, thus enabling the seal to be repositioned subsequently or even removed repeatedly and in a simple manner.

In Fig. 2, the seal shown in Fig. 1 is shown as being in engagement with a wall formed by two essentially parallel wall sections 1 and 2. As illustrated, the fold defined by the two limbs 14 and 16 is between the two wall sections, the two limbs 14 and 16 resting against one another. Although not illustrated, the person skilled in the art will realise that it is advantageous and possible to provide means in this area of contact to inhibit relative motion in the plane defined by this contact surface, e.g. matching profiles. It can furthermore be seen from Fig. 2 that the profile-type projections 18 provided on the third limb 16 have the second wall section 2 applied to them and define distinct sealing portions with respect to the latter.

Although not shown in Fig. 2, the person skilled in the art should realise that it would also be possible for one or more additional limbs to be provided to engage behind the second wall section 2. It should be mentioned in general terms that the arrangement shown in Fig. 2 can be applied both to double walls where the wall sections 1 and 2 are fixed relative to one another and to a case in which, for example, the second wall section 2 is mounted in such a way that it can move relative to the first wall section 1. These two versions will be outlined briefly below as regards the arrangement of the seal.

In a first case, the seal according to the invention is to be used to seal a conduit in an opening of a wall section, the wall section comprising two essentially parallel sections 1 and 2 which define a cavity between them. As in the embodiment shown in Fig. 1, the seal is moved into proximity with the opening from the left, with the result that the tongue 30 projects through the opening and can be grasped from the other side. In this state, the fitter will subject the tongue 30 to tension, thus enlarging the angle defined by the limbs 14 and 16 to an angle of as much as 180°, as in the embodiment shown in Fig. 1. This tensile loading thus makes it possible to pass the two limbs 14 and 16 through the opening until the limb 12 enters into engagement with the wall section 1. Relieving the tensile loading on the tongue 30 allows the limbs 14 and 16 to spring back into the position shown, with the result that they enter into the cavity defined between the wall sections 1 and 2 and seal the said cavity on both surfaces. For accurate positioning of the limbs 14 and 16, it may be necessary to subject the tongue to pressure in order in this way to introduce the limbs 14 and 16 into a desired position in the cavity. If the seal is to be released, e.g. for purposes of maintenance, it is sufficient to subject the tongue to tension in order in this way to pull the two limbs 14 and 16 out of the cavity and, for example, arrange them essentially in alignment.

In another version, in which the wall section 2 is provided separately from the wall section 1 and can be moved relative to the latter, e.g. as a flange area of an air-conditioning system to be fitted, the arrangement of the seal takes place essentially in accordance with the description given with reference to Fig. 1. Once the seal has been arranged and accurately positioned, if necessary by subjecting the tongue 30 to tension several times, the wall section 2 can be moved closer to the wall section from the right-hand side in order to subject the fold formed by the two limbs 14 and 16 to a load counter to the prestress. When the wall section 2 is then fixed in position, the seal formed is maintained, optionally assisted by the profile-type projections 18.

In summary, it can be stated that greater ease of handling is achieved with the seal according to the invention. Sealing engagement with the wall engagement portion can be made in a releasable and repeatable manner, and the possibility of damage to the seal during fitting and removal is virtually excluded. If the wall engagement portion is formed by a plurality of limbs, specific portions thereof can be made deformable, e.g. by allowing the angle defined by the limbs to be varied by pulling the tongue.

Although the present invention has been described above exclusively with reference to a currently preferred embodiment, the person skilled in the art should realise that various alterations and modifications are possible within the scope of the claims. In particular, the person skilled in the art will realise that, although not illustrated, it would also be possible for profile-type projections to be formed on the limb 12 designed as a contact portion. The person skilled in the art should also realise that various combinations of thickness of material are possible for the various limbs. Finally, it should be mentioned that, although the tongue is arranged at the distal end of a limb in the embodiment described and shown, it could also be situated in some other position on the limb, if appropriate.

## Claims

1. A seal for sealing one or more conduits, in particular pipes of a heating/air-conditioning system in an opening defined in a wall (1,2), having a conduit engagement portion and a wall engagement portion (10), characterised in that the wall engagement portion (10) has a tongue (30) which allows at least one part of the wall engagement portion (10) to be positioned relative to the wall (1, 2).

2. A seal according to Claim 1, characterized in that the tongue has profile-type projections (32).

3. A seal according to Claim 1 or 2, characterized in that the wall engagement portion (10) is formed essentially by at least two, in particular three or more, limbs (12, 14, 16).

4. A seal according to Claim 3, characterized in that part of the wall (1) can be accommodated between two limbs (12, 14).

5. A seal according to Claim 3 or 4, characterized in that the at least two limbs (12, 14, 16) define an angle that can be varied by acting upon the tongue (30).

6. A seal according to one of Claims 3 to 5, characterized in that the at least two limbs (12, 14, 16) are prestressed relative to one another.

7. A seal according to one of Claims 3 to 6, characterized in that limbs (14, 16) can be positioned between two wall sections.

8. A seal according to one of the preceding claims, characterized in that the wall engagement portion 10 is designed in such a way that it can be brought into engagement with at least two essentially parallel wall sections (1, 2).

9. A seal according to one of the preceding claims, characterized in that the wall engagement portion (10) has profile-type projections (18) on at least one surface which can be brought into engagement with a wall section (1, 2).

10. A seal according to one of Claims 3 to 9, characterized in that surfaces of the limbs (12, 14, 16), in particular mutually opposite surfaces, and/or wall sections (1, 2) have means provided on them for inhibiting relative motion essentially parallel to the surfaces.
